# EUROPÄISCHE PATENTSCHRIFT

(11) **EP 4 477 934 B1**
(45) Veröffentlichungstag und Bekanntmachung des Hinweises auf die Patenterteilung: **09.09.2026**
(21) Anmeldenummer: 23179600.4
(22) Anmeldetag: 15.06.2023
(51) Int. Cl.: F16L 57/00, H02G 3/04, F16J 3/04

(54) **MANSCHETTE MIT TÜLLENVERBUND, MANSCHETTENANORDNUNG SOWIE DEREN VERWENDUNG**
CUFF WITH GROMMET COMPOSITE, CUFF ASSEMBLY, AND USE THEREOF
MANCHON AVEC ENSEMBLE MANCHON, ENSEMBLE MANCHON ET UTILISATION DE CEUX-CI

(43) Veröffentlichungstag der Anmeldung: 18.12.2024
(73) Patentinhaber: DOYMA GmbH & Co, 28876 Oyten (DE)
(72) Erfinder: Meinders, Jan, 28879 Grasberg (DE)
(74) Vertreter: Eisenführ Speiser

(56) Entgegenhaltungen:
- WO-A1-2017/043323
- DE-U1- 202010 006 031
- GB-A- 2 176 347
- US-A1- 2015 054 229

## Beschreibung

Die vorliegende Erfindung betrifft eine Manschette, insbesondere Endmanschette, zum Abdichten einer Leitungsanordnung gegenüber einem Mantel, durch welches die Leitungsanordnung hindurchgeführt ist, mit den Merkmalen gemäß dem Oberbegriff von Anspruch 1.

Manschetten der vorstehend bezeichneten Art sind allgemein bekannt. Sie werden bei der Installation von Leitungen in Bauwerken dazu verwendet, den Mantel, welches die Leitung führt, an dessen Ende gegenüber der hindurchgeführten Leitung abzudichten. Hierfür ist es erforderlich, dass die Manschette einerseits dicht gegenüber dem Mantel ist, und andererseits dicht gegenüber der hindurchgeführten Leitungsanordnung.

Unter einer Leitungsanordnung wird im Rahmen der Erfindung eine Anordnung von einer oder mehreren Leitungen verstanden, wobei die Leitungen denselben oder unterschiedliche Durchmesser aufweisen können. Es sind Manschetten bekannt, die nur eine einzige Tülle aufweisen, wobei diese Manschetten bisweilen auch als Endtüllen bezeichnet werden, genauso wie Manschetten bekannt sind, die mehrere Tüllen aufweisen.

Im Stand der Technik sind bislang bei der Verwendung mehrerer Tüllen an einer Manschette die Tüllen jeweils als individuelle zylindrische oder konische Segmente ausgebildet, die zueinander beabstandet, gleichmäßig oder ungleichmäßig über den Umfang verteilt, an der Manschette angeordnet sind.

Wenngleich die bekannten Manschetten ihre Dichtungsaufgabe grundsätzlich zufriedenstellend verrichten, so hat sich in der Praxis gezeigt, dass gerade zum Abdichten einer größeren Anzahl von Leitungen wegen des notwendigen radialen Raumbedarfs der einzelnen Tüllen vergleichsweise große Mäntel verwendet werden müssen, um mehrere Leitungen durchzuführen. Das Verhältnis zwischen Durchmesser und Anzahl der Tüllen pro Manschette einerseits und Durchmesser des von der Manschette endseitig abgedichteten Mantels andererseits sind als verbesserungswürdig angesehen worden.

GB 2 176 347 A offenbart eine Schutzhülse für elektrische Verbindungen zwischen einem mehrpoligen Kabel und einer Mehrzahl einzelner Leiter. Die Schutzhülse umfasst an einem Ende einen zylindrischen Abschnitt zum Abdichten gegenüber dem Kabel und am gegenüberliegenden Ende mehrere tüllenartige, als Verbund ausgeführte Abschnitte für die jeweils einzeln in die Schutzhülse eingeführten Leiter.

WO 2017/043323 A1 betrifft eine Manschette aus Gummi zum Abdichten einer zwei Drähte aufweisenden Leitung gegen ein die Leitung umgebendes Schirmrohr. Die Manschette weist einen zylindrischen Dichtungsabschnitt für das Schirmrohr auf. Am entgegengesetzten Ende der Manschette ist ein Paar von Dichtungsprofilen für die als Einzelkabel weitergeführten Leitungen vorgesehen.

Demzufolge lag der vorliegenden Erfindung die Aufgabe zugrunde, eine Manschette der eingangs bezeichneten Art dahingehend weiterzubilden, dass die vorstehend beschriebenen Nachteile möglichst weitgehend überwunden werden. Insbesondere lag der Erfindung die Aufgabe zugrunde, eine Manschette der vorstehend bezeichneten Art dahingehend weiterzuentwickeln, dass mittels dieser gegenüber den mehreren einzelnen Leitungen eine verbessert Abdichtung erzielt ist.

Die Erfindung löst die ihr zugrundeliegende Aufgabe mit einer Manschette nach Anspruch 1. Insbesondere schlägt die Erfindung vor, dass bei der Manschette einige oder sämtliche der Tüllen als Verbund ausgebildet sind, wobei die Tüllen in einem Verbund jeweils aneinander angeformt sind. Die Erfindung macht sich die Erkenntnis zunutze, dass ein fluiddichtes Anliegen an die durchzuführende Leitung an einer jeweiligen Tülle auch noch möglich ist, wenn die Tülle nicht vollständig umlaufend als eigenständiger Zylinder oder Kegelkörper ausgebildet wird, sondern wenn die Tüllen derart aneinander angenähert sind, dass sie mit ihrer äußeren Kontur ineinander übergehen. Dies wird dadurch erreicht, dass die Tüllen als Verbund ausgebildet werden, wobei die Tüllen in dem Verbund aneinander angeformt sind. Jede der Tüllen ist zur Aufnahme einer Leitung eingerichtet, die äußere Kontur der Tüllen geht allerdings ineinander über. Auf diese Weise können mehr Tüllen als zuvor an einer Manschette angeordnet werden und/oder die Tüllen können zur Aufnahme größerer Leitungsdurchmesser ausgebildet werden als zuvor.

Unter einer Leitung werden erfindungsgemäß Medienleitungen, also Leitungen zum Transport von gasförmigen oder flüssigen Fluiden, sowie von fließ- oder schüttfähigen Stoffen, und von ein- oder mehrphasigen Stoffgemischen verstanden, sowie Leitungen zur Übertragung elektrischer Leistung und/oder zur elektrischen oder nichtelektrischen Übertragung von Daten, beispielsweise elektrische oder optische Signalleitungen.

Unter einem Mantel ist erfindungsgemäß ein Rohr, insbesondere Wellrohr, oder ein Schlauch zu verstehen, mit einem inneren Hohlvolumen zur Aufnahme einer oder mehrerer Leitungen.

In bevorzugten Ausführungsformen weist die Manschette zwei, drei, vier oder mehr als vier in einem Verbund ausgebildete Tüllen auf, wobei zumindest zwei Tüllen im Verbund ausgebildet sind, und vorzugsweise sämtliche Tüllen in einem oder mehreren Verbünden ausgebildet sind, wobei jeweils in einem Verbund mindestens zwei Tüllen aneinander angeformt sind, und wobei vorzugsweise sämtliche Tüllen in einem Verbund aneinander angeformt sind, derart, dass jeweils unmittelbar benachbarte Tüllen mindestens aneinander angeformt sind.

In einer weiteren bevorzugten Ausführungsform sind der erste Dichtabschnitt und die zweiten Dichtabschnitte des Verbunds axial zueinander beabstandet. Die Axialrichtung ist hierbei die Erstreckungsrichtung des Mantels in dem ersten Dichtabschnitt, welche vorzugsweise parallel zu der Erstreckungsrichtung der Leitungen in den zweiten Dichtabschnitten ist. Aufgrund einer elastischen Ausbildung der Manschette insgesamt kann es im montierten Zustand gleichwohl zu Abweichungen der Erstreckungsrichtungen der Leitung relativ zum Mantel kommen. Die axiale Beabstandung der beiden Dichtabschnitte der Manschette zueinander wird vorzugsweise dadurch erreicht, dass der erste Abschnitt an einem ersten axialen Ende der Manschette ausgebildet ist, während die zweiten Dichtabschnitte an einem gegenüberliegenden zweiten Ende in axialer Richtung der Manschette ausgebildet sind.

In einer weiteren bevorzugten Ausführungsform weist jede der Tüllen ein inneres Hohlvolumen zur Aufnahme einer Leitung auf, wobei die Hohlvolumina benachbarter Tüllen jeweils mittels einer gemeinsamen Trennwand voneinander getrennt sind. Dadurch, dass sich jeweils benachbarte Tüllen eine Trennwand gewissermaßen teilen, kann bei unverändertem Durchmesser der Manschette, der im Wesentlichen eine Funktion des aufzunehmenden und abzudichtenden Mantels ist, eine größere Anzahl von Tüllen untergebracht werden und/oder ein größerer Durchmesser der jeweiligen einzelnen Tüllen, da nicht für jede Tülle ein vollständig umlaufender Körper artikuliert werden muss.

In einer weiteren bevorzugten Ausführungsform weisen die Tüllen jeweils eine geschlossene Tüllenhaut auf, welche dazu eingerichtet ist, mittels der Leitung oder einem geeigneten Werkzeug durchdrungen zu werden, und sich vorzugsweise nach erfolgtem Durchdringen an die Leitung anzulegen. Die Tüllenhaut ist mithin vorzugsweise im zweiten Dichtabschnitt angeordnet und bildet im durchdrungenen Zustand den zweiten Dichtabschnitt aus. Durch das Verwenden der Tüllenhaut ist es auch möglich, die Manschette nur partiell zu belegen, eine oder mehrere Tüllen mit anderen Worten also undurchdrungen zu lassen, oder die Manschette komplett undurchdrungen als Blinddeckel zu verwenden.

In alternativen bevorzugten Ausführungsformen weisen die Tüllen anstelle der Tüllenhaut eine vorgeformte Ausnehmung zur Aufnahme jeweils einer Leitung mit vorbestimmtem Durchmesser auf, die dazu eingerichtet ist, sich in eingeführtem Zustand der Leitung dichtend an der Leitung anzulegen.

In einer weiteren bevorzugten Ausführungsform weist der erste Dichtabschnitt eine Anzahl, vorzugsweise Mehrzahl, innenseitig angeordneter Rippen auf, die dazu eingerichtet sind, den Mantel kraft- und/oder formschlüssig zu halten.

In einer weiteren bevorzugten Ausführungsform weist der erste Dichtabschnitt einen außenseitigen Spannabschnitt zur Aufnahme einer Spannvorrichtung auf. Der erste Dichtabschnitt weist vorzugsweise eine oder mehrere außenseitig angeordnete in Umfangsrichtung verlaufende Erhebungen auf, die den Spannabschnitt definieren. Wird nur eine Erhebung verwendet, markiert sie vorzugsweise eine Anlageschulter für die Spannvorrichtung. Werden mehrere Erhebungen verwendet, markieren sie vorzugsweise zwischen sich den Spannabschnitt. Die Halte- und/oder Dichtwirkung der Manschette wird vorzugsweise mittels Anlegen einer oder mehrerer Spannvorrichtungen, am äußeren Umfang der Manschette im Bereich des ersten Dichtabschnittes erhöht. Als Spannvorrichtung können beispielsweise Spannschellen, Kabelbinder, oder dergleichen verwendet werden.

Vorzugsweise ist der Mantel als Wellrohr mit einer Mehrzahl aufeinanderfolgender Vorsprünge mit dazwischen angeordneten Vertiefungen ausgebildet, wobei benachbarte Vertiefungen jeweils einen Abstand A_{V} zueinander einnehmen, und wobei die Rippen der Manschette vorzugsweise einen zu dem Abstand der Vertiefungen des Mantels korrespondierenden Abstand A_{R} zueinander aufweisen. Auf diese Weise ist der erste Dichtabschnitt der Manschette dazu eingerichtet, mit seinen Rippen in die Vertiefungen des Mantels einzugreifen. Hierdurch wird die Manschette verliersicher am Mantel gehalten. Der Eingriff gelingt auch noch dann, wenn A_{V} und A_{R} nicht exakt übereinstimmen, wobei vorzugsweise die Breite der Rippen geringer ist als die Breite der Vertiefungen, was in einer bevorzugten Ausführungsform vorgeschlagen wird.

In einer weiteren bevorzugten Ausführungsform sind die Tüllen derart aneinander angeformt, dass ihre Außenkontur stetig in die Außenkontur einer benachbarten Tülle übergeht. Unter stetig wird erfindungsgemäß ein knickfreier und/oder sprungfreier Übergang verstanden, der aufgrund der Knick- und/oder Sprungfreiheit zu einem günstigen Verformungsverhalten führt. Eine Tangentenstetigkeit oder Stetigkeit der Krümmung im mathematischen Sinne ist optional möglich, aber nicht zwingend erforderlich.

In einer weiteren bevorzugten Ausführungsform weist der Verbund der Tüllen eine alle Tüllen umschließende Umfangsfläche auf, welche jeweils im Bereich eines Übergangs von der Außenkontur einer Tülle zu der Außenkontur einer anderen Tülle einen konkaven Flächenabschnitt aufweist. Die Außenkonturen der Tülle benachbart zu dem Bereich des Übergangs sind vorzugsweise als konvexe Flächenabschnitte ausgebildet. Der stetige Übergang der Außenkonturen der Tüllen wird in dieser Ausgestaltung vorzugsweise direkt mittels der konkaven Flächenabschnitte herbeigeführt, wobei die konkaven Flächenabschnitte zu diesem Zweck ihrerseits stetig in die benachbarten konvexen Flächenabschnitte übergehen.

Vorzugsweise erstreckt sich in einer solchen Ausführungsform bei Verwendung einer geraden Anzahl von Tüllen die gemeinsame Trennwand zwischen zwei benachbarten Tüllen zwischen zwei konkaven Flächenabschnitten. Analog erstreckt sich vorzugsweise bei Verwendung einer ungeraden Anzahl von Tüllen die gemeinsame Trennwand zwischen einem konkaven Flächenabschnitt an einem ersten Ende und einem Hohlvolumen einer Tülle des Verbunds an einem zweiten Ende.

Hierdurch ist in beiden Fällen die Länge der Trennwand in einer Ebene parallel zu der Längsachse der Manschette, insbesondere koaxial mit der Längsachse der Manschette, verkürzt, was zu einer besseren Stabilität und besseren Verformungsverhalten der Manschette im Bereich des Tüllenverbunds führt.

Ferner weist erfindungsgemäß der zweite Dichtabschnitt jeweils eine umlaufende Dichtwulst auf, die dazu eingerichtet ist, sich nach Durchdringen der Tülle fluiddicht an die Leitung anzulegen.

Die Erfindung ist vorstehend anhand eines ersten Aspekts unter Bezugnahme auf eine Manschette beschrieben worden. In einem zweiten Aspekt betrifft die Erfindung eine Manschettenanordnung zum Führen einer Leitungsanordnung durch einen Mantel und eine Manschette hindurch, umfassend einen Mantel und eine die Leitung gegenüber dem Mantel abdichtende Manschette.

Die Erfindung löst in diesem Aspekt die eingangs bezeichnete Aufgabe ebenfalls, indem die Manschette nach einer der vorstehend beschriebenen bevorzugten Ausführungsformen ausgebildet ist.

Die Erfindung macht sich hinsichtlich der Manschettenanordnung dieselben Vorteile und Erkenntnisse zunutze wie die Manschette gemäß dem ersten Aspekt.

Bevorzugte Ausführungsformen der Manschette gemäß dem ersten Aspekt sind zugleich bevorzugte Ausführungsformen der Manschettenanordnung des zweiten Aspekts und umgekehrt, weswegen zur Vermeidung von Wiederholungen diesbezüglich auf die obigen Ausführungen verwiesen wird.

In einem dritten Aspekt betrifft die Erfindung eine Verwendung einer Manschette und/oder einer Manschettenanordnung zum Führen von Leitungen in einem Leitungssystem für eines der folgenden:
Wärmepumpe,
Klimaanlage,
Nah- oder Fernwärme,
Heizung,
Kabelbündel, insbesondere Strom-, elektrisches Daten- oder Glasfaserkabelbündel, oder einer Mischkonfektion aus mehreren verschiedenen Leitungen, insbesondere verschiedenen Medien- oder Datenleitungen.

Die Erfindung löst in dem dritten Aspekt die eingangs bezeichnete Aufgabe, indem die Manschette und/oder die Manschettenanordnung nach einer der vorstehend beschriebenen bevorzugten Ausführungsformen ausgebildet ist. Die Erfindung macht sich im dritten Aspekt dieselben Vorteile und Erkenntnisse zunutze wie die Manschette des ersten Aspekts und die Manschettenanordnung des zweiten Aspekts.

Bevorzugte Ausführungsformen des ersten Aspekts und des zweiten Aspekts sind zugleich bevorzugte Ausführungsformen der Verwendung gemäß dem dritten Aspekt und umgekehrt, weswegen wiederum zur Vermeidung von Wiederholungen auf die vorstehenden Ausführungen verwiesen wird.

Die Erfindung wird nachfolgend unter Bezugnahme auf die beigefügten Figuren anhand bevorzugter Ausführungsbeispiele näher beschrieben. Hierbei zeigen:
- Fig. 1: eine schematische räumliche Außenansicht einer Manschette gemäß einem ersten bevorzugten Ausführungsbeispiel,
- Fig. 2: eine Schnittdarstellung der Manschette gemäß Fig. 1,
- Fig. 3.: eine schematische räumliche Außenansicht einer Manschette gemäß einem zweiten bevorzugten Ausführungsbeispiel,
- Fig. 4: eine Schnittdarstellung der Manschette gemäß Fig. 3,
- Fig. 5: eine schematische Außenansicht der Manschette gemäß den Figuren 3 und 4 im montierten Zustand, und
- Fig. 6: eine schematische Schnittansicht der Anordnung gemäß Fig. 5.

In den Figuren werden für beide bevorzugten Ausführungsbeispiele für funktional identische oder ähnliche Bauteile dieselben Bezugszeichen verwendet, sofern für die mit diesen Bezugszeichen versehenen Elemente nichts Entgegenstehendes beschrieben ist. Daher gelten auch für diejenigen Figuren, zu denen die Bezugszeichen nicht erneut erläutert werden, die Erläuterungen zu den übrigen Figuren im Wege des Verweises.

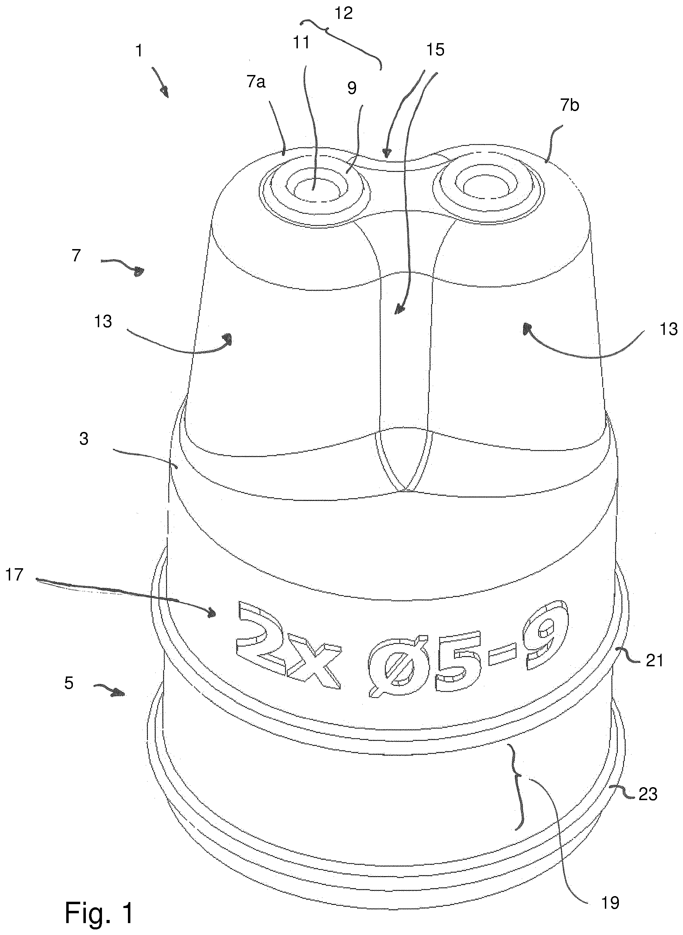

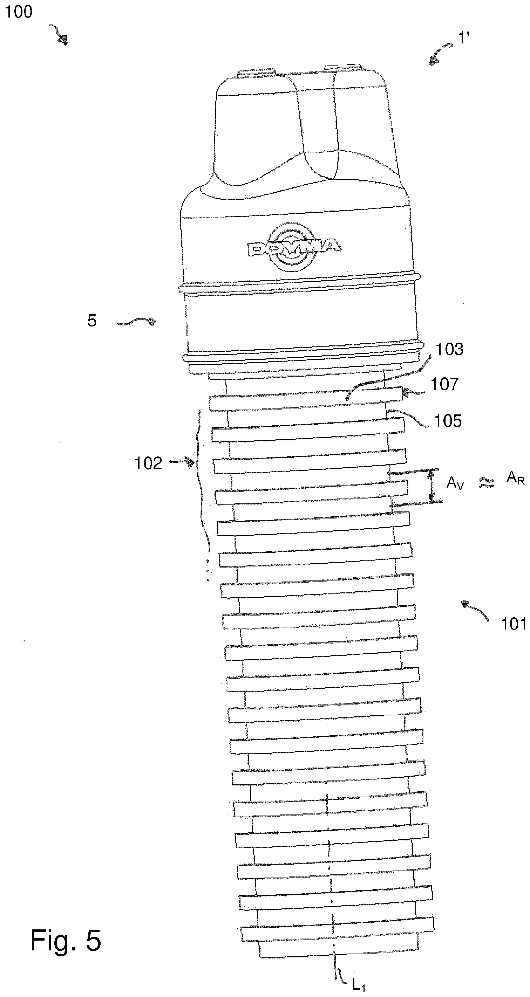

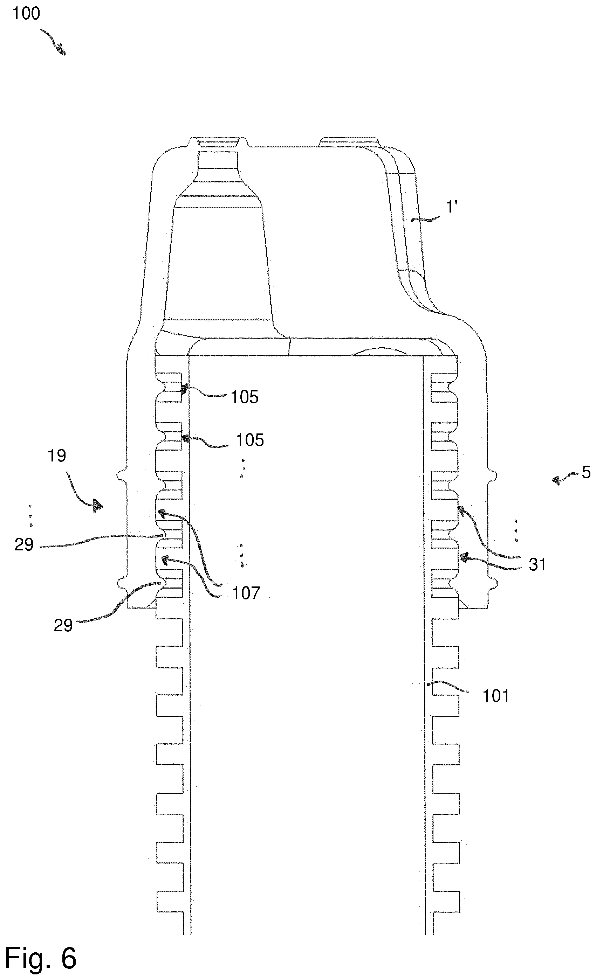

In Fig. 1 ist eine Manschette 1 gemäß einem ersten bevorzugten Ausführungsbeispiel der Erfindung gezeigt. Die Manschette 1 weist einen Grundkörper 3 aus einem elastischen Werkstoff auf, beispielsweise einem Elastomer. An dem Grundkörper 3 ist an einem ersten, in Fig. 1 unteren, Ende ein erster Dichtabschnitt 5 ausgebildet, der zur Aufnahme eines Mantels (101, vgl. Fig. 5, 6) innenseitig ausgebildet ist. An einem gegenüberliegenden, in Fig. 1 oberen Ende des Grundkörpers 3, ist ein Tüllenverbund 7 ausgebildet, der eine Mehrzahl von Tüllen, nämlich eine erste Tülle 7a und eine gegenüberliegend benachbart angeordnete zweite Tülle 7b aufweist. Die Tüllen 7a, 7b des Tüllenverbunds 7 sind aneinander angeformt.

Jede Tülle 7a, 7b weist zur Erhöhung der Formstabilität einen Vorsprung in Form einer Dichtwulst 9 auf, der sich umlaufend um eine Tüllenhaut 11 erstreckt. Die Tüllenhaut 11 ist dazu eingerichtet, von einer Leitung oder einem geeigneten Werkzeug durchdrungen zu werden, so dass die Tülle 7a,7b sich mittels der Dichtwulst 9 fluiddicht an die Leitung anlegen kann. Die Tüllenhaut 11 und die Dichtwulst 9 bilden einen zweiten Dichtabschnitt 12 aus.

Die Tüllen 7a, 7b weisen außenseitig eine konvex geformte Außenkontur 13 auf, wobei die Außenkonturen 13 der Tüllen 7a, 7b stetig ineinander übergehen. Der Übergang wird durch einen konkav geformten Flächenabschnitt 15 gebildet. In diesem Ausführungsbeispiel, das eine gerade Anzahl Tüllen 7a, 7b im Tüllenverbund 7 aufweist, wie exemplarisch anhand von zwei Tüllen 7a, 7b gezeigt, stehen sich jeweils konvexe Flächenabschnitte 13 gegenüber, ebenso wie sich konkave Flächenabschnitte 15 einander gegenüberstehen.

Die Manschette 1 weist an der Außenseite des Grundkörpers 3 optional einen Beschriftungsabschnitt 17 auf, der die Anzahl der Tüllen des Tüllenverbunds 7 sowie den zulässigen Durchmesserbereich für die Aufnahme der Leitungen an der Tüllhaut 11 und der Dichtwulst 9 angibt. Im vorliegenden Ausführungsbeispiel ist die Manschette zur Aufnahme von zwei Leitungen mit einem Durchmesser von jeweils 5 bis 9mm eingerichtet.

Im Bereich des ersten Dichtabschnitts weist die Manschette 1 außenseitig einen Spannabschnitt 19 auf, der an beiden Seiten durch umlaufende Erhebungen 21, 23 begrenzt wird. Der Spannabschnitt 19 ist vorzugsweise dazu eingerichtet, eine Spannschelle oder ähnliches aufzunehmen, um an dem eingeführten Mantel (vgl. Fig. 5, 6) befestigt zu werden und die Dichtwirkung herzustellen oder zu erhöhen.

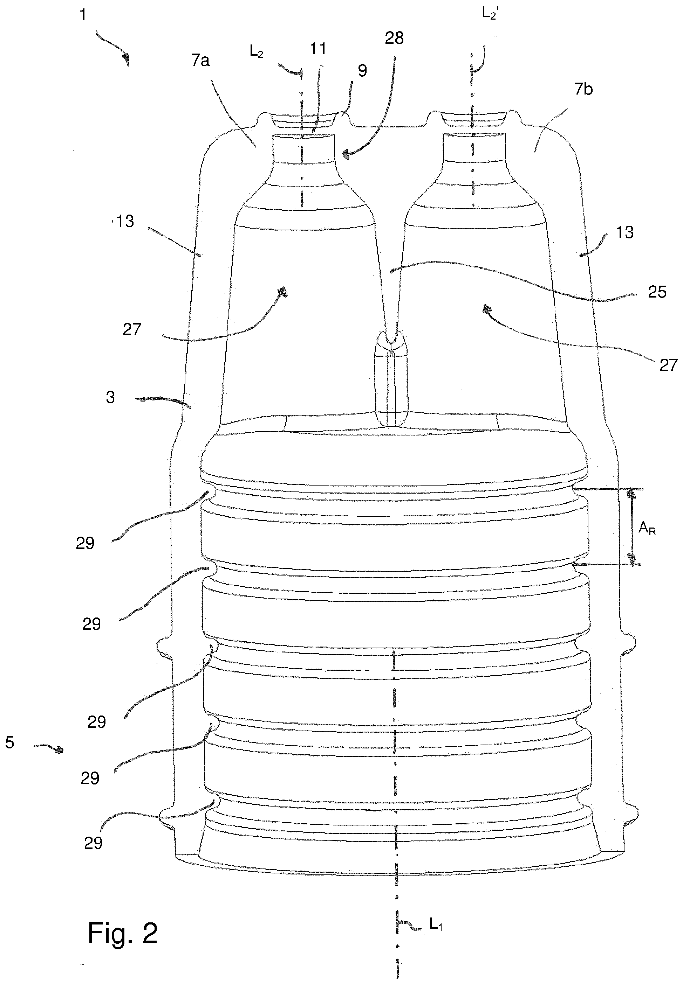

Fig. 2 zeigt eine Schnittdarstellung durch die Manschette 1. Die beiden Tüllen 7a, 7b des Tüllenverbunds 7 weisen jeweils ein inneres Hohlvolumen 27 auf, das außenseitig von dem konvexen Flächenabschnitt 13 und innenseitig von einer gemeinsamen Trennwand 25 begrenzt wird.

Im Bereich der Tüllenhaut 11 und der Dichtwulst 9 weisen die Tüllen 7a, 7b jeweils einen Verjüngungsabschnitt 28 auf, der zum Führen der aufzunehmenden Leitung eingerichtet ist. Die Tüllen 7a, 7b und insbesondere die Führungsabschnitte 28, sind vorzugsweise in Richtung von Längsachsen L2, L2' ausgerichtet, wobei die Längsachsen L2, L2' weiter vorzugsweise parallel zu einer Längsachse L1 des ersten Dichtabschnitts 5 ausgerichtet sind. Aufgrund der Elastizität des Grundkörpers 3 kann es auch zu Abweichungen der Achsenausrichtungen zueinander im montierten Zustand und Betrieb der Manschette 1 kommen.

Im Bereich des ersten Dichtabschnitts 5, der dazu vorgesehen ist, endseitig auf den Mantel (vgl. Figuren 5, 6) aufgeschoben zu werden, weist die Manschette 1 eine Mehrzahl von innenseitig angeordneten Rippen 29 auf, die vorzugsweise umlaufend ausgebildet sind, und die einen axialen Abstand A_{R} zueinander einnehmen. Die Rippen 29 sind dazu eingerichtet, den Mantel im aufgesteckten Zustand kraft- und/oder formschlüssig zu halten.

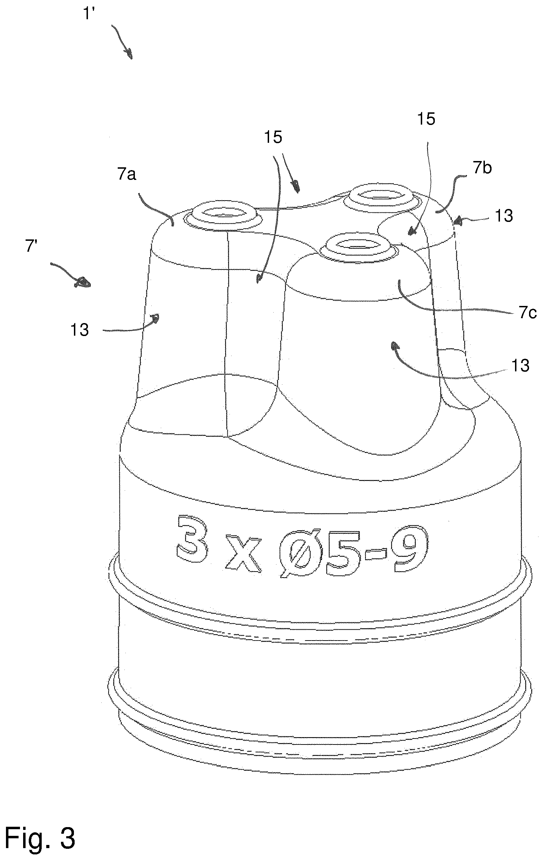

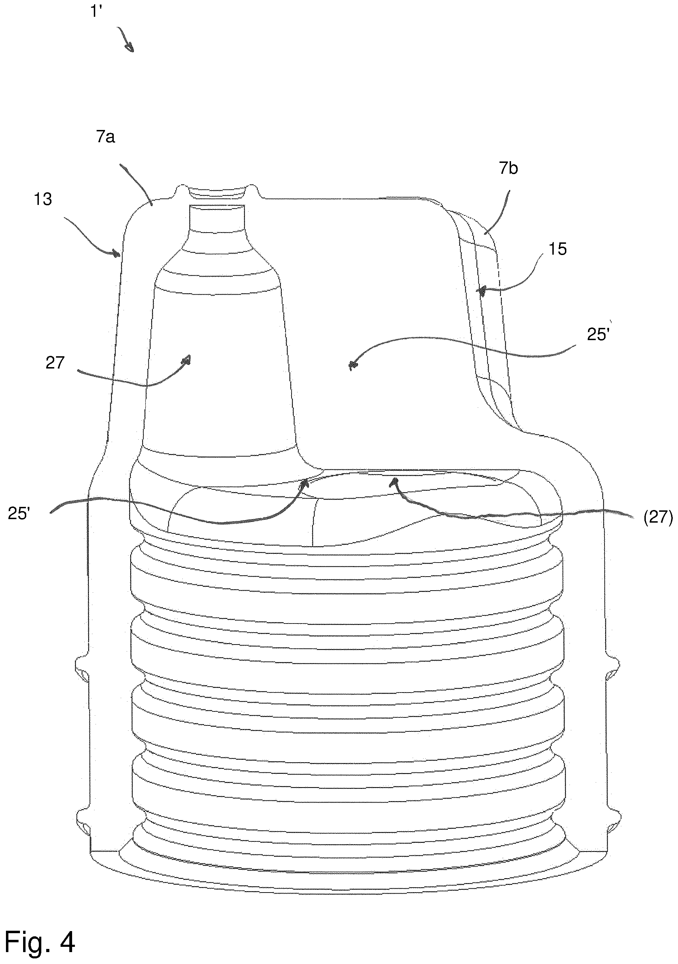

Während das erste Ausführungsbeispiel der Figuren 1 und 2 eine Manschette 1 mit einem Tüllenverbund 7 aus zwei Tüllen 7a, 7b zeigt, zeigt das zweite Ausführungsbeispiel gemäß den Figuren 3 bis 6 eine modifizierte Manschette 1'. Die Manschette 1' ist nach dem gleichen Prinzip aufgebaut wie die Manschette 1 der Figuren 1 und 2, weist aberdrei Tüllen 7a, 7b, 7c auf, die ebenfalls aneinander angeformt sind. Die Tüllen 7a, 7b, 7c sind nach dem gleichen Prinzipien konstruiert wie die Tüllen 7a, 7b der Manschette 1 gemäß den Figuren 1 und 2. Sie weisen eine konvexe Außenkontur 13 auf, die jeweils stetig (vgl. obige Definition) über einen konkaven Flächenabschnitt 15 in die Außenkontur 13 der benachbarten Tüllen 7a, 7b, 7c übergehen. Da hier eine ungerade Anzahl von Tüllen im Verbund 7' angeordnet ist, stehen sich jeweils eine Tülle 7a, 7b, 7c auf der einen Seite und ein konkaver Flächenabschnitt 15 auf der anderen Seite gegenüber. Dies führt zu einer etwas anderen Gestaltung der gemeinsamen Trennwände 25' auf der Innenseite, vgl. Fig. 4.

In Fig. 4 ist anschaulich dargestellt, dass sich die gemeinsame Trennwand 25' zwischen zwei benachbarten Hohlvolumina 27 nicht von einem konkaven Flächenabschnitt 15 zum gegenüberliegenden Flächenabschnitt erstreckt, sondern eben von einem konkaven Flächenabschnitt 15 auf der einen Seite bis hin zu einem Hohlvolumen 27 der gegenüberliegenden Tülle 7a, 7b, 7c auf der anderen Seite.

In Fig. 5 und Fig. 6 ist eine Manschettenanordnung 100 an einem Mantel 101 gezeigt. Exemplarisch wird der Mantel 101 mit einer darauf aufgesteckten Manschette 1' gemäß dem Ausführungsbeispiel der Figuren 3 und 4 gezeigt. Genauso gut könnte anstelle der Manschette 1' aber auch die Manschette 1 gemäß der Figuren 1 und 2 auf dem Mantel 101 angeordnet sein. Die Prinzipien sind dieselben, weshalb zur Vermeidung von Wiederholungen auf die Beschreibungen der Figuren 1 bis 4 verweisen wird.

Der Mantel 101 ist als Wellrohr ausgebildet und weist an einer Außenwand 102 eine Vielzahl von Vorsprüngen 103 auf, die vorzugsweise vollständig umlaufend ausgebildet sind. Die Vorsprünge 103 sind alternierend mit zwischen ihnen liegenden Vertiefungen 105 ausgebildet. Die Vertiefungen weisen zueinander einen Abstand A_{V} in Richtung der Längsachse L₁ auf, der in etwa, vorzugsweise exakt, dem Abstand A_{R} der Rippen 29 im ersten Dichtabschnitt 5 der Manschette 1, bzw. 1' ist. Für die Zwecke dieser Beschreibung wird von einem Mantel 101 in geradem, ungestauchtem und nicht gelängtem Zustand ausgegangen.

Der Mantel weist entlang des Umfangs der Vorsprünge 103 jeweils eine Dichtfläche 107 auf, die zur dichtenden Anlage an der Manschette 1 bzw. 1' eingerichtet sind.

Die Anordnung der Rippen 29 in den Vertiefungen 105 des Mantels 101 ist anschaulich in Fig. 6 illustriert. Die Manschette 1' (bzw. auch die Manschette 1) weist eine Mehrzahl beabstandet zueinander angeordneter Dichtflächen 31 auf, die im montierten Zustand der Manschette 1' (bzw. Manschette 1) fluiddicht an den korrespondierenden Dichtflächen 107 des Mantels 101 anliegen.

Durch das Ineinandergreifen der Rippen 29 in die Vertiefungen 105 wird die Manschette 1' (bzw. Manschette 1) wenigstens kraftschlüssig am Mantel 101 gehalten.

In Zusammenschau ergibt sich aus der Diskussion der vorhergehenden Ausführungsbeispiele anschaulich, dass durch das Anformen der Tüllen 7a, 7b bzw. 7a, 7b, 7c aneinander ein geringerer Abstand zwischen den einzelnen Tüllen des Tüllenverbunds 7 realisiert werden kann als bei konventioneller Ausbildung der Tüllen. Dadurch können mehr Tüllen in einem Verbund angeordnet sein, als Einzeltüllen bei gleichbleibendem Manteldurchmesser. Alternativ oder zusätzlich können die Tüllen des Tüllenverbunds einen größeren individuellen Durchmesser haben, das heißt, dass sie zur Aufnahme im Vergleich zu konventionellen Lösungen größerer Leitungsdurchmesser, wiederum bei gleichbleibendem Manteldurchmesser dimensioniert werden können.

### Bezugszeichenliste

- 1, 1': Manschette
- 3: Grundkörper
- 5: Dichtabschnitt
- 7: Tüllenverbund
- 7a, 7b, 7c: Tülle
- 9: Dichtwulst
- 11: Tüllenhaut
- 12: zweiter Dichtabschnitt
- 13: Außenkontur
- 15: Flächenabschnitt
- 17: Beschriftungsabschnitt
- 19: Spannabschnitt
- 21, 23: Erhebung
- 25, 25': Trennwand
- 27: Hohlvolumen
- 28: Verjüngungsabschnitt
- 29: Rippen
- 31: Dichtflächen
- 100: Manschettenanordnung
- 101: Mantel
- 102: Außenwand
- 103, 105, 107: Vorsprünge
- A_{R}: Abstand
- A_{V}: Abstand

## Patentansprüche

1. Manschette (1,1') zum Abdichten einer Leitungsanordnung gegenüber einem Mantel (101), durch welches die Leitungsanordnung hindurchgeführt ist, wobei die Manschette (1) einen ersten Dichtabschnitt (5) aufweist, der zur fluiddichten, endseitigen Anlage an dem Mantel (101) eingerichtet ist, und mehrere Tüllen (7a,b; 7a,b,c) aufweist, die jeweils einen zweiten Dichtabschnitt (12) aufweisen, der dazu eingerichtet ist, fluiddicht an einer Leitung der Leitungsanordnung anzuliegen,
wobei einige oder sämtliche der Tüllen (7a,b; 7a,b,c) als Verbund (7) ausgebildet sind, wobei die Tüllen (7a,b; 7a,b,c) in einem Verbund (7) jeweils aneinander angeformt sind,
**dadurch gekennzeichnet, dass** der zweite Dichtabschnitt (12) jeweils eine umlaufende Dichtwulst (9) aufweist, die dazu eingerichtet ist, sich nach Durchdringen der Tülle (7a,b; 7a,b,c) fluiddicht an die Leitung anzulegen.

2. Manschette (1,1') nach Anspruch 1,
**dadurch gekennzeichnet, dass** der erste Dichtabschnitt (5) und die zweiten Dichtabschnitte (12) des Verbunds (7) axial zueinander beabstandet sind.

3. Manschette (1,1') nach Anspruch 1 oder 2,
**dadurch gekennzeichnet, dass** jede der Tüllen (7a,b; 7a,b,c) ein inneres Hohlvolumen (27) zur Aufnahme einer Leitung aufweist, wobei die Hohlvolumina (27) benachbarter Tüllen (7a,b; 7a,b,c) jeweils mittels einer gemeinsamen Trennwand (25) voneinander getrennt sind.

4. Manschette (1,1') nach einem der vorstehenden Ansprüche,
**dadurch gekennzeichnet, dass** die Tüllen (7a,b; 7a,b,c) jeweils eine geschlossene Tüllenhaut (11) aufweisen, welche dazu eingerichtet ist, mittels der Leitung durchdrungen zu werden und sich vorzugsweise nach erfolgtem Durchdringen fluiddicht an die Leitung anzulegen.

5. Manschette (1,1') nach einem der vorstehenden Ansprüche,
**dadurch gekennzeichnet, dass** der erste Dichtabschnitt (5) eine Anzahl, vorzugsweise Mehrzahl, innenseitig angeordneter Rippen (29) aufweist, die dazu eingerichtet sind, den Mantel (101) kraft- und/oder formschlüssig zu halten.

6. Manschette nach einem der vorstehenden Ansprüche,
**dadurch gekennzeichnet, dass** der erste Dichtabschnitt (5) einen außenseitigen Spannabschnitt (19) zur Aufnahme einer Spannvorrichtung aufweist, wobei der erste Dichtabschnitt (5) vorzugsweise eine oder mehrere außenseitig in Umfangsrichtung angeordnete Erhebungen (21,23) aufweist, die den Spannabschnitt (19) definieren.

7. Manschette (1,1') nach Anspruch 5 oder 6,
wobei der Mantel (101) als Wellrohr mit einer Mehrzahl außenseitiger aufeinanderfolgender Vorsprünge (103) mit dazwischen angeordneten Vertiefungen (105) ausgebildet ist, wobei benachbarte Vertiefungen (105) jeweils einen Abstand (A_{V}) zueinander einnehmen, und wobei vorzugsweise die Rippen (29) einen zu dem Abstand (A_{V}) der Vertiefungen (105) korrespondierenden Abstand (A_{R}) zueinander aufweisen.

8. Manschette (1,1') nach einem der vorstehenden Ansprüche,
**dadurch gekennzeichnet, dass** die Tüllen (7a,b; 7a,b,c) derart aneinander angeformt sind, dass ihre Außenkontur (13) stetig in die Außenkontur (13) einer benachbarten Tülle (7a,b; 7a,b,c) übergeht.

9. Manschette (1,1') nach Anspruch 8,
**dadurch gekennzeichnet, dass** der Verbund der Tüllen eine alle Tüllen umschließende Umfangsfläche aufweist, welche jeweils im Bereich eines Übergangs von der Außenkontur einer Tülle zu der Außenkontur einer anderen Tülle einen konkaven Flächenabschnitt aufweist.

10. Manschette (1) nach Anspruch 9,
**dadurch gekennzeichnet, dass** die gemeinsame Trennwand (25) sich zwischen zwei konkaven Flächenabschnitten (15) erstreckt.

11. Manschette (1 ') nach Anspruch 9,
**dadurch gekennzeichnet, dass** die gemeinsame Trennwand (25) sich zwischen einem konkaven Flächenabschnitt (15) an einem ersten Ende und einem Hohlvolumen (27) einer Tülle (7a,b,c) des Verbunds (7) an einem zweiten Ende erstreckt.

12. Manschettenanordnung (100) zum Führen einer Leitungsanordnung durch einen Mantel (101) und eine Manschette (1,1') hindurch, umfassend ein Mantel (101) und eine die Leitung gegenüber dem Mantel (101) abdichtende Manschette (1,1'), **dadurch gekennzeichnet, dass** die Manschette (1) nach einem der vorstehenden Ansprüche ausgebildet ist.

13. Verwendung einer Manschette (1,1') oder einer Manschettenanordnung (100) zum Führen einer Leitungsanordnung in einem Leitungssystem für eines der folgenden:
Wärmepumpe,
Klimaanlage,
Nah- oder Fernwärme,
Heizung,
Kabelbündel, insbesondere Strom-, elektrisches Daten- oder Glasfaserkabelbündel, oder einer Mischkonfektion aus mehreren verschiedenen Leitungen, insbesondere verschiedenen Medien- oder Datenleitungen,
**dadurch gekennzeichnet, dass** die Manschette (1) nach einem der Ansprüche 1 bis 11 ausgebildet ist, oder dass die Manschettenanordnung nach Anspruch 12 ausgebildet ist.

## Claims

1. Collar (1, 1') for sealing a line arrangement against a sheath (101), through which the line arrangement is passed, wherein the collar (1) has a first sealing section (5) which is configured for fluid-tight, end-side contact with the sheath (101), and has a plurality of grommets (7a,b; 7a,b,c) which each have a second sealing section (12) which is configured to bear fluid-tight against a line of the line arrangement, wherein some or all of the grommets (7a,b; 7a,b,c) are formed as a composite (7), wherein the grommets (7a,b; 7a,b,c) in a composite (7) are each moulded onto one another,
**characterised in that** the second sealing section (12) each has a circumferential sealing bead (9) which is configured to fluid-tightly bear against the line after penetration of the grommet (7a,b; 7a,b,c).

2. Collar (1, 1') according to claim 1, **characterised in that** the first sealing section (5) and the second sealing sections (12) of the composite (7) are spaced apart axially from one another.

3. Collar (1, 1') according to claim 1 or 2, **characterised in that** each of the grommets (7a,b; 7a,b,c) has an inner cavity volume (27) for receiving a line, wherein the cavity volumes (27) of adjacent grommets (7a,b; 7a,b,c) are each separated from one another by means of a common partition wall (25).

4. Collar (1, 1') according to any one of the preceding claims, **characterised in that** the grommets (7a,b; 7a,b,c) each have a closed grommet membrane (11) which is configured to be penetrated by means of the line and preferably to bear fluid-tight against the line after penetration has taken place.

5. Collar (1, 1') according to any one of the preceding claims, **characterised in that** the first sealing section (5) has a number, preferably a plurality, of ribs (29) arranged on the inner side, which are configured to hold the sheath (101) in a force-fitting and/or form-fitting manner.

6. Collar according to any one of the preceding claims, **characterised in that** the first sealing section (5) has an outer tensioning section (19) for receiving a tensioning device, wherein the first sealing section (5) preferably has one or more protrusions (21, 23) arranged on the outer side in the circumferential direction, which define the tensioning section (19).

7. Collar (1, 1') according to claim 5 or 6, wherein the sheath (101) is formed as a corrugated tube having a plurality of outer successive protrusions (103) with recesses (105) arranged therebetween, wherein adjacent recesses (105) each have a distance (AV) from one another, and wherein preferably the ribs (29) have a distance (AR) from one another corresponding to the distance (AV) of the recesses (105).

8. Collar (1, 1') according to any one of the preceding claims, **characterised in that** the grommets (7a,b; 7a,b,c) are moulded onto one another such that their outer contour (13) continuously merges into the outer contour (13) of an adjacent grommet (7a,b; 7a,b,c).

9. Collar (1, 1') according to claim 8, **characterised in that** the composite of the grommets has a circumferential surface enclosing all grommets, which in each case has a concave surface section in the region of a transition from the outer contour of one grommet to the outer contour of another grommet.

10. Collar (1) according to claim 9, **characterised in that** the common partition wall (25) extends between two concave surface sections (15).

11. Collar (1') according to claim 9, **characterised in that** the common partition wall (25) extends between a concave surface section (15) at a first end and a cavity volume (27) of a grommet (7a,b,c) of the composite (7) at a second end.

12. Collar arrangement (100) for guiding a line arrangement through a sheath (101) and a collar (1, 1'), comprising a sheath (101) and a collar (1, 1') sealing the line against the sheath (101), **characterised in that** the collar (1) is formed according to any one of the preceding claims.

13. Use of a collar (1, 1') or of a collar arrangement (100) for guiding a line arrangement in a line system for one of the following: heat pump, air conditioning system, local or district heating, heating, cable bundle, in particular power, electrical data or fibre-optic cable bundle, or a mixed assembly of a plurality of different lines, in particular different media or data lines, **characterised in that** the collar (1) is formed according to any one of claims 1 to 11, or that the collar arrangement is formed according to claim 12.

## Revendications

1. Manchon (1, 1') destiné à assurer l'étanchéité d'un ensemble de conduites par rapport à une gaine (101), à travers laquelle l'ensemble de conduites est guidé, dans lequel le manchon (1) présente une première section d'étanchéité (5) qui est mise au point pour être en appui, côté extrémité de manière étanche aux fluides, sur la gaine (101), et plusieurs douilles (7a, b ; 7a, b, c), qui présentent chacune une deuxième section d'étanchéité (12) qui est mise au point pour reposer , de manière étanche aux fluides, sur une conduite de l'ensemble de conduites, dans lequel certaines ou toutes les douilles (7a, b ; 7a, b, c) sont réalisées sous la forme d'un assemblage (7), dans lequel les douilles (7a, b ; 7a, b, c) sont respectivement formées les unes contre les autres en un assemblage (7),
**caractérisé en ce que** la deuxième section d'étanchéité (12) présente respectivement un bourrelet d'étanchéité (9) périphérique, qui est mis au point pour s'appliquer sur la conduite de manière étanche aux fluides après avoir traversé la douille (7a, b ; 7a, b, c).

2. Manchon (1, 1') selon la revendication 1,
**caractérisé en ce que** la première section d'étanchéité (5) et les deuxièmes sections d'étanchéité (12) de l'assemblage (7) sont espacées axialement l'une par rapport à l'autre.

3. Manchon (1, 1') selon la revendication 1 ou 2,
**caractérisé en ce que** chacune des douilles (7a, b ; 7a, b, c) présente un volume creux intérieur (27) pour recevoir une conduite, dans lequel les volumes creux (27) de douilles (7a, b ; 7a, b, c) adjacentes sont séparés les uns des autres respectivement au moyen d'une cloison de séparation commune (25).

4. Manchon (1, 1') selon l'une quelconque des revendications précédentes,
**caractérisé en ce que** les douilles (7a, b ; 7a, b, c) présentent chacune une peau de douille (11) fermée, qui est mise au point pour être traversée au moyen de la conduite et s'appliquer, de préférence de manière étanche aux fluides, sur la conduite une fois la traversée effectuée.

5. Manchon (1, 1') selon l'une quelconque des revendications précédentes,
**caractérisé en ce que** la première section d'étanchéité (5) présente un nombre, de préférence une multitude, de nervures (29) disposées côté intérieur, qui sont mises au point pour maintenir la gaine (101) à force et/ou par complémentarité de forme.

6. Manchon selon l'une quelconque des revendications précédentes,
**caractérisé en ce que** la première section d'étanchéité (5) présente une section de serrage côté extérieur (19) pour recevoir un dispositif de serrage, dans lequel la première section d'étanchéité (5) présente de préférence une ou plusieurs parties surélevées (21, 23) disposées côté extérieur dans la direction périphérique, qui définissent la section de serrage (19).

7. Manchon (1, 1') selon la revendication 5 ou 6,
dans lequel la gaine (101) est réalisée comme un tube ondulé avec une multitude de parties faisant saillie (103) se suivant les unes les autres côté extérieur avec des renfoncements (105) disposés entre elles, dans lequel des renfoncements (105) adjacents présentent chacun une distance (Aᵥ) les uns par rapport aux autres, et dans lequel les nervures (29) présentent les unes par rapport aux autres de préférence une distance (A_{R}) correspondant à la distance (Aᵥ) des renfoncements (105).

8. Manchon (1, 1') selon l'une quelconque des revendications précédentes,
**caractérisé en ce que** les douilles (7a, b ; 7a, b, c) sont formées les unes contre les autres de telle manière que leur contour extérieur (13) passe constamment dans le contour extérieur (13) d'une douille (7a, b ; 7a, b, c) adjacente.

9. Manchon (1, 1') selon la revendication 8,
**caractérisé en ce que** l'assemblage des douilles présente une surface périphérique renfermant toutes les douilles, qui présente respectivement une section de surface concave dans la zone d'une transition du contour extérieur d'une douille vers le contour extérieur d'une autre douille.

10. Manchon (1) selon la revendication 9,
**caractérisé en ce que** la cloison de séparation commune (25) s'étend entre deux sections de surface concaves (15).

11. Manchon (1') selon la revendication 9,
**caractérisé en ce que** la cloison de séparation commune (25) s'étend entre une section de surface concave (15) sur une première extrémité et un volume creux (27) d'une douille (7a, b, c) de l'assemblage (7) sur une deuxième extrémité.

12. Ensemble à manchon (100) destiné à guider un ensemble de conduites à travers une gaine (101) et un manchon (1, 1'), comprenant une gaine (101) et un manchon (1, 1') assurant l'étanchéité d'une conduite par rapport à la gaine (101), **caractérisé en ce que** le manchon (1) est réalisé selon l'une quelconque des revendications précédentes.

13. Utilisation d'un manchon (1, 1') ou d'un ensemble à manchon (100) pour guider un ensemble de conduites dans un système de conduites pour l'un des éléments suivants :
pompe à chaleur,
installation de climatisation,
chauffage local ou collectif,
chauffage,
faisceaux de câbles, en particulier faisceaux de câbles électriques, de données ou de fibres optiques, ou un ensemble mixte composé de plusieurs conduites différentes, en particulier de différentes conduites de fluide ou de lignes de données,
**caractérisé en ce que** le manchon (1) est réalisé selon l'une quelconque des revendications 1 à 11, ou que l'ensemble à manchon est réalisé selon la revendication 12.
